# DEMANDE DE BREVET EUROPEEN

(11) **EP 4 328 771 A1**
(43) Date de publication de la demande: **28.02.2024**
(21) Numéro de dépôt: 23188807.4
(22) Date de dépôt: 31.07.2023
(51) Int. Cl.: G06F 21/52, G06F 21/71

(54) **PROCÉDÉ D'EXÉCUTION D'UN CODE MACHINE PAR UN CALCULATEUR**

(30) Priorité: 24.08.2022 FR 2208504
(71) Demandeur: Commissariat à l'énergie atomique et aux énergies alternatives, 75015 Paris (FR); Centre National de la Recherche Scientifique, 75016 Paris Cedex 16 (FR); SORBONNE UNIVERSITE, 75006 Paris (FR)
(72) Inventeur: CHAMELOT, Thomas, 38054 Grenoble Cedex 9 (FR); COUROUSSE, Damien, 38054 Grenoble Cedex 9 (FR); HEYDEMANN, Karine, 75005 Paris (FR)
(74) Mandataire: INNOV-GROUP

(57) **Abrégé**

Ce procédé comportant :
- la construction (162) d'une signature pour une instruction courante :
- à partir de signaux générés par un étage d'une chaîne matérielle de traitement, cet étage étant un décodeur ou un étage suivant le décodeur dans la chaîne matérielle de traitement, et
- à partir de la précédente signature construite pour une instruction qui la précède, puis

- la vérification (163) de l'intégrité du code machine exécuté en comparant (170) la signature construite pour l'instruction courante à une signature de référence préenregistrée, puis
- seulement lorsque la vérification de l'intégrité de l'instruction courante est réussie, le déchiffrement (156) d'un cryptogramme de l'instruction suivante à l'aide de la signature construite pour l'instruction courante.

## Description

L'invention concerne un procédé d'exécution d'un code machine par un calculateur ainsi que le code machine exécuté par ce procédé. L'invention concerne également :
- un support d'enregistrement d'informations et un calculateur pour la mise en oeuvre de ce procédé d'exécution, et
- un compilateur pour générer ce code machine.

Pour obtenir des informations sur un code machine ou provoquer un fonctionnement inattendu du code machine, il est connu de le soumettre à des attaques connues sous le terme d'« injection de fautes » ou « fault attack » en anglais. Ces attaques consistent à perturber le fonctionnement du calculateur lors de l'exécution du code machine par divers moyens physiques comme des modifications des tensions d'alimentation, des modifications du signal d'horloge, l'exposition du calculateur à des ondes électromagnétiques et autres.

À l'aide de telles perturbations, un attaquant peut altérer l'intégrité des instructions machines ou des données pour, par exemple, retrouver une clé secrète d'un système cryptographique, contourner des mécanismes de sécurité tels que la vérification d'un code PIN lors d'une authentification ou simplement empêcher l'exécution d'une fonction essentielle pour la sécurité d'un système critique.

Une attaque par injection de fautes peut provoquer une altération du fonctionnement du calculateur, par exemple, par des modifications des instructions qui sont exécutées par l'unité arithmétique et logique. Pour cela, il est fréquent que les fautes injectées visent à perturber le fonctionnement du décodeur d'instructions du calculateur pour produire des instructions fautées.

Lorsque la perturbation du décodeur empêche seulement l'exécution d'une ou plusieurs des instructions du code machine ou lorsque l'altération a un effet sur le processeur équivalent au fait de ne pas exécuter l'instruction fautée, on parle alors de saut d'instructions. Lorsque la perturbation du décodeur conduit à remplacer une ou plusieurs des instructions du code machine par d'autres instructions exécutables par le calculateur, on parle alors de remplacement d'instructions.

Lorsque la perturbation du décodeur modifie une instruction de branchement, on observe un effet de détournement du flot de contrôle. Le flot de contrôle correspond au chemin d'exécution suivi lors de l'exécution du code machine. Le flot de contrôle est classiquement représenté sous la forme d'un graphe orienté connu sous le terme de graphe de flot de contrôle ou « control flow graph » en anglais. L'effet de détournement du flot de contrôle peut être observé quand une instruction de branchement est altérée ou quand la condition impliquée dans un branchement conditionnel est modifiée ou quand l'adresse de retour d'une fonction est modifiée.

De tels attaques sont rendues plus faciles si, au préalable, le code machine peut être analysé. Ainsi, pour rendre ces attaques plus difficiles, il a été proposé de chiffrer les instructions du code machine afin de rendre son analyse plus compliquée. Un exemple de procédé d'exécution d'un code machine chiffré est décrit dans l'article suivant : M.Werner, T. Unterluggauer, D. Schaenrath, and S. Mangard : « Sponge-Based Control-Flow Protection for IoT Devices », EuroS&P, 2018. Par la suite, cet article est désigné par le terme « Werner2018 ».

Le procédé décrit dans Werner2018 est particulièrement intéressant car le cryptogramme de chaque instruction est déchiffré à partir d'un état interne du calculateur qui est mis à jour en fonction du cryptogramme de la précédente instruction déchiffrée. Ainsi, le cryptogramme de l'instruction courante à exécuter ne peut être déchiffré correctement que si les cryptogrammes de l'ensemble des instructions précédentes sont intègres, c'est-à-dire qu'ils n'ont pas été modifiés, par exemple, par une injection de fautes. Ceci est avantageux mais ne permet pas de se prémunir contre une attaque qui provoque seulement une erreur lors du décodage d'une instruction. En effet, dans ce dernier cas, le décodage étant effectué après le déchiffrement de l'instruction, le cryptogramme de l'instruction n'est pas modifié. Pour remédier à cet inconvénient, Werner2018 suggère en plus, sans le décrire en détail, de construire l'état interne du calculateur en fonction des signaux générés par le décodeur d'instructions lors du décodage de la précédente instruction. Cela permet de garantir l'intégrité des signaux générés par le décodeur d'instructions en plus de l'intégrité de son cryptogramme.

Plus précisément, dans Werner2018, un cryptogramme fauté d'une instruction courante Iᵢ ou une erreur introduite lors du décodage de l'instruction Iᵢ, entraîne un déchiffrement incorrect du cryptogramme Iᵢ₊₁* de l'instruction suivante. Ainsi, le déchiffrement du cryptogramme Iᵢ₊₁* produit une instruction erronée I'ᵢ₊₁ différente de l'instruction attendue Iᵢ₊₁. Puisque les signaux générés par le décodeur lors de l'exécution de l'instruction I'ᵢ₊₁ sont pris en compte pour mettre à jour l'état du calculateur utilisé pour déchiffrer le cryptogramme de l'instruction Iᵢ₊₂, à partir de l'instruction Iᵢ, le calculateur génère uniquement des instructions erronées. La première instruction erronée I'ᵢ₊ₙ produite qui n'appartient pas au jeu d'instructions du calculateur, provoque une faute d'exécution qui arrête l'exécution du code machine. Dans le cas où le jeu d'instructions du calculateur est clairsemé, l'indice n de l'instruction qui provoque la faute d'exécution est petit. Par contre, si le jeu d'instructions du calculateur n'est pas clairsemé, alors l'indice n peut être très grand ce qui retarde, voire rend impossible, la détection du défaut d'intégrité. De plus, si l'instruction I'ᵢ₊₁ appartient au jeu d'instructions du calculateur, cela provoque un comportement inattendu du calculateur puisque que l'instruction exécutée I'ᵢ₊₁ est différente de l'instruction attendue Iᵢ₊₁. Un tel comportement inattendu peut remettre en cause la sécurité du code machine.

De l'état de la technique est également connu de :
- Chamelot Thomas et Al : « SCI-FI : Control Signal, Code and Control Flow Integrity against Fault Injection Attacks », 2022 Design, Automation & Test In Europe Conférence & Exhibition, EDAA, 14/03/2022, pages 556-559,
- US2014/082327A1,
- US2021/218562A1.
L'article de Chamelot Thomas concerne la signature d'un code machine non-chiffré.

L'invention vise à améliorer le procédé décrit dans Werner2018. En particulier, l'invention vise donc à proposer un procédé d'exécution d'un code machine qui permet de signaler une altération d'une instruction, un saut d'instruction et une altération du fonctionnement du décodeur d'instructions du calculateur sans présenter les inconvénients du procédé de Werner2018. Elle a donc pour objet un tel procédé d'exécution d'un code machine conforme à la revendication 1.

L'invention a également pour objet un code machine apte à être exécuté en mettant en oeuvre le procédé d'exécution ci-dessus.

L'invention a également pour objet un support d'enregistrement d'informations lisible par un calculateur, ce support d'enregistrement d'informations contenant le code machine ci-dessus.

L'invention a également pour objet un calculateur pour la mise en oeuvre du procédé d'exécution ci-dessus.

Enfin, l'invention a également pour objet un compilateur apte à transformer automatiquement un code source d'un programme d'ordinateur en un code machine revendiqué.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un calculateur électronique apte à exécuter un code machine;
- la figure 2 est une illustration schématique d'un compilateur apte à générer le code machine exécuté par le calculateur de la figure 1 ;
- la figure 3 est un organigramme d'un procédé de compilation du code machine à l'aide du compilateur de la figure 2;
- la figure 4 est un organigramme d'un procédé d'exécution du code machine à l'aide du calculateur de la figure 1.

### CHAPITRE I - Notations et définitions

Dans ces figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un calculateur.

Un « code source » est une représentation du programme dans un langage informatique, n'étant pas directement exécutable par un calculateur et étant destiné à être transformé, par un compilateur, en un code machine directement exécutable par le calculateur.

Un programme ou un code est dit être « directement exécutable » lorsqu'il est apte à être exécuté par un calculateur sans que ce calculateur n'ait besoin au préalable que le programme soit compilé au moyen d'un compilateur ou de l'interpréter au moyen d'un interpréteur.

Une « instruction » désigne une instruction machine exécutable par un calculateur. Une telle instruction est constituée :
- d'un opcode, ou code d'opération, codant la nature de l'opération à exécuter, et
- d'un ou plusieurs opérandes définissant la ou les valeurs des paramètres de cette opération.

La « valeur d'une instruction » est une valeur numérique obtenue, à l'aide d'une fonction bijective, à partir de la succession de « 0 » et de « 1 » qui code, en langage machine, cette instruction. Cette fonction bijective peut être la fonction identité.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le calculateur, c'est-à-dire sans nécessiter une compilation ou une interprétation préalable. Le code machine comporte une succession d'instructions classées les unes après les autres et qui forme, dans le code machine, une suite ordonnée d'instructions. Le code machine débute par une instruction initiale et se termine par une instruction finale. Par rapport à une instruction Iᵢ donnée du code machine, l'instruction Iᵢ₋₁ située du côté de l'instruction initiale est appelée « instruction précédente » et l'instruction Iᵢ₊₁ situées du côté de l'instruction finale, est appelée « instruction suivante ». L'indice "i" est le numéro d'ordre de l'instruction Iᵢ dans le code machine.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

Un « flot d'instructions » est une succession d'instructions exécutées les unes après les autres.

La notation "Iᵢ*" désigne le cryptogramme de la valeur d'une instruction Iᵢ en clair.

Dans ce texte, une « suite d'instructions consécutives » est un groupe d'instructions du code machine qui sont systématiquement exécutées les unes après les autres.

Une « instruction de branchement » est une instruction qui, lorsqu'elle est exécutée par le calculateur, est apte à remplacer l'adresse contenue dans le compteur ordinal par une autre adresse. L'instruction de branchement comporte donc au moins comme paramètre cette autre adresse. On rappelle que le compteur ordinal contient l'adresse de la prochaine instruction à exécuter par le calculateur. En absence d'instruction de branchement, à chaque fois qu'une instruction est exécutée, le compteur ordinal est incrémenté de la taille de l'instruction actuellement exécutée. En absence d'instruction de branchement, les instructions sont systématiquement exécutées séquentiellement les unes après les autres dans l'ordre où elles sont enregistrées dans une mémoire principale, c'est-à-dire dans l'ordre de leur indice "i".

On parle d'exécution d'une fonction pour désigner l'exécution des instructions réalisant cette fonction.

### CHAPITRE II : Exemples de mode de réalisation

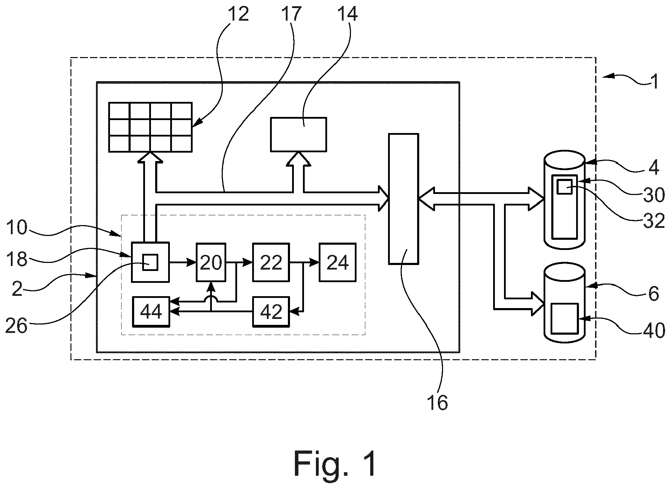

La figure 1 représente un calculateur électronique 1 comportant un microprocesseur 2, une mémoire principale 4 et un support 6 de stockage de masse. Par exemple, le calculateur 1 est un ordinateur, un smartphone, une tablette électronique, une carte à puce ou similaire.

Le microprocesseur 2 comporte ici :
- une chaîne matérielle 10 de traitement des instructions à exécuter;
- un ensemble 12 de registres ;
- un module de commande 14,
- une interface 16 d'entrée/sortie de données, et
- un bus 17 qui relie les différents composants du microprocesseur 2 entre eux.

La mémoire 4 est configurée pour stocker des instructions d'un code binaire 30 d'un programme devant être exécuté par le microprocesseur 2. La mémoire 4 est une mémoire à accès aléatoire. Typiquement, la mémoire 4 est une mémoire volatile. La mémoire 4 peut être une mémoire externe au microprocesseur 2 comme représenté sur la figure 1. Dans ce cas, la mémoire 4 est, par exemple, réalisée sur un substrat mécaniquement séparé du substrat sur lequel sont réalisés les différents éléments du microprocesseur 2 comme la chaîne 10.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

Dans cet exemple de réalisation le code binaire 30 comporte notamment un code machine 32 chiffré. Le code machine 32 contient une succession de mots Wᵢ chacun de même taille que l'instruction qu'il contient. Typiquement, la taille de chaque mot Wᵢ, en nombre de bits, est supérieure à huit ou seize bits. Ici, la taille de chaque mot Wᵢ est égale à trente-deux bits. Par la suite, l'indice i est le numéro d'ordre du mot Wᵢ dans le code machine 32. Ainsi, l'indice i-1 correspond au mot précédent le mot Wᵢ. De même, l'indice i+1 correspond au mot suivant le mot Wᵢ. Comme expliqué plus loin, chaque mot Wᵢ contient soit un cryptogramme Iᵢ* d'une instruction Iᵢ à exécuter soit un cryptogramme Srefᵢ* d'une signature de référence. Ici la taille d'un mot Wᵢ est égale à la taille du cryptogramme qu'il contient. Dans cet exemple de réalisation, les mots Wᵢ contenant un cryptogramme Srefᵢ* représentent moins de 30 % et, typiquement, moins de 20 % ou moins de 10 % du nombre total de mots Wᵢ du code machine 32. Les autres mots Wᵢ du code machine 32 contiennent chacun le cryptogramme Iᵢ* d'une instruction à exécuter.

A titre d'illustration, le microprocesseur 2 est conforme à l'architecture ARM (« Advanced Risk Machine ») version 7 et supporte les jeux d'instructions tels que Thumb1 et/ou Thumb2. Un jeu d'instructions définit de façon limitative la syntaxe des instructions que le microprocesseur 2 est capable d'exécuter. Ce jeu d'instructions définit donc notamment l'ensemble des opcodes possibles pour une instruction. La syntaxe d'une instruction est incorrecte si sa syntaxe ne correspond à aucune des syntaxes possibles pour une instruction exécutable par le microprocesseur 2. Par exemple, si la plage de bit d'une instruction I_{d} qui correspond à la plage de bit utilisée pour coder l'Opcode de l'instruction contient une valeur qui est différente de toutes les valeurs possibles pour un Opcode, alors sa syntaxe est incorrecte.

Dans cet exemple de réalisation, l'ensemble 12 comporte des registres généraux utilisables pour stocker tout type de données et des registres dédiés. Contrairement aux registres généraux, les registres dédiés sont dédiés au stockage de données particulières généralement automatiquement générées par le microprocesseur 2.

Le module 14 est configuré pour déplacer des données entre l'ensemble 12 de registres et l'interface 16. L'interface 16 est notamment apte à acquérir des données et des instructions, par exemple, depuis la mémoire 4 et/ou le support 6 extérieurs au microprocesseur 2.

La chaîne 10 est plus connue sous le terme anglais de "pipeline". La chaîne 10 permet de commencer à exécuter une instruction du code machine alors que le traitement, par la chaîne 10, de la précédente instruction de ce code machine n'est pas encore terminé. De telles chaînes de traitement sont bien connues et seuls les éléments de la chaîne 10 nécessaires à la compréhension de l'invention sont décrits plus en détail.

La chaîne 10 comporte typiquement les étages suivants :
- un chargeur 18 d'instructions,
- un module 20 de déchiffrement,
- un décodeur 22 d'instructions, et
- une unité arithmétique et logique 24 qui exécute les instructions.

Le chargeur 18 charge la prochaine instruction à exécuter par l'unité 24 à partir de la mémoire 4. Plus précisément, le chargeur 18 charge le mot Wᵢ du code machine 32 sur lequel pointe un compteur ordinal 26. Sauf si sa valeur est modifiée par l'exécution d'une instruction de branchement, la valeur du compteur ordinal 26 est incrémentée d'un pas régulier à chaque exécution d'une instruction par l'unité arithmétique et logique 24. Le pas régulier est égal à l'écart entre les adresses de deux instructions immédiatement consécutives dans le code machine 32. Ce pas est ici appelé "pas unitaire".

Le module 20 de déchiffrement déchiffre le cryptogramme Iᵢ* chargé et transmet l'instruction déchiffrée Iᵢ au décodeur 22. L'instruction déchiffrée Iᵢ est également appelée « instruction en clair ». Pour cela, le module 20 implémente et exécute une fonction pré-programmée g⁻¹(Iᵢ*, Sᵢ₋₁) de déchiffrement, où :
- Iᵢ* est le cryptogramme de l'instruction Iᵢ en clair,
- Sᵢ₋₁ est une signature construite pour l'instruction précédente Iᵢ₋₁, et
- g⁻¹() est l'inverse de la fonction de chiffrement g().

La construction de la signature Sᵢ₋₁ est décrite plus loin.

Dans ce premier mode de réalisation, la fonction g() est une fonction qui limite la dépendance statistique entre la valeur de Iᵢ et la valeur de Iᵢ*. Ici, la fonction g() est la fonction « OU EXCLUSIF » représentée par le symbole XOR. Ainsi, dans ce mode de réalisation, l'instruction Iᵢ en clair est obtenue à l'aide de la relation suivante : Iᵢ = Iᵢ* XOR Sᵢ₋₁.

Le décodeur 22 décode l'instruction déchiffrée Iᵢ pour obtenir des signaux de configuration qui configurent le microprocesseur 2 pour qu'il exécute, typiquement lors du prochain cycle d'horloge, l'instruction déchiffrée. Un de ces signaux de configuration code la nature de l'opération à exécuter par l'unité 24. Ce signal de configuration est issu de / est construit à partir de l'opcode de l'instruction déchiffrée. D'autres signaux de configuration indiquent, par exemple, si l'instruction déchiffrée est une instruction de chargement d'une donnée depuis la mémoire 4 ou d'écriture d'une donnée dans la mémoire 4. Ces signaux de configuration sont transmis à l'unité 24. D'autres signaux de configuration comportent les valeurs des opérandes chargées. Selon l'instruction à exécuter, ces signaux sont transmis à l'ensemble 12 de registres ou à l'unité 24.

Lorsque le décodeur 22 n'arrive pas à décoder une instruction, il génère un signal d'erreur. Typiquement, cela se produit si la syntaxe de l'instruction déchiffrée est incorrecte.

L'unité 24 exécute les unes après les autres les instructions déchiffrées. L'unité 24 est aussi capable d'enregistrer le résultat de l'exécution de ces instructions dans un ou plusieurs des registres de l'ensemble 12.

Dans cette description, on utilisera comme synonymes « exécution par le microprocesseur 2 » et « exécution par l'unité 10 ».

Une instruction (machine) Iᵢ donnée doit successivement être traitée, dans l'ordre, par le chargeur 18, le module 20 de déchiffrement, le décodeur 22 et l'unité 24. De plus, le chargeur 18, le module 20 de déchiffrement, le décodeur 22 et l'unité 24 sont capables de travailler en parallèle les uns des autres pendant un même cycle d'horloge. Ainsi, au cours d'un même cycle d'horloge, le chargeur 18 peut être en train de charger le cryptogramme Iᵢ₊₁* de l'instruction suivante Iᵢ₊₁, le décodeur 22 en train de décoder l'instruction déchiffrée Iᵢ et l'unité 24 en train d'exécuter l'instruction Iᵢ₋₁. La chaîne 10 permet ainsi de traiter en parallèle plusieurs instructions du code machine 30. Le module 20 déchiffre le cryptogramme Iᵢ₊₁* après le décodage de l'instruction Iᵢ par le décodeur 22.

Pour assurer l'intégrité du code machine 32, la chaîne 10 comporte en plus les modules matériels suivants :
- un constructeur 42 de signature, et
- un vérificateur 44 d'intégrité.

Le constructeur 42 est configuré pour réaliser les opérations suivantes :
1) mémoriser la précédente signature Sᵢ₋₁ construite pour la précédente instruction Iᵢ₋₁,
2) construire une signature Si pour l'instruction Iᵢ à partir de la précédente signature Sᵢ₋₁ construite et des signaux générés par le décodeur 22 en réponse au décodage de l'instruction Iᵢ.

Pour réaliser l'opération 2) ci-dessus, le constructeur 42 implémente et exécute une fonction pré-programmée f(Idᵢ ; Sᵢ₋₁), où :
- Idᵢ est un ensemble de signaux générés par le décodeur 22 en réponse au décodage de l'instruction Iᵢ,
- Sᵢ₋₁ est la précédente signature construite pour l'instruction Iᵢ₋₁, et
- f() est une fonction de signature prédéterminée.

Chaque signal généré par le décodeur se présente sous la forme d'un vecteur de bits composé des valeurs 0 et 1. L'ensemble Idᵢ contient les valeurs actuelles de chacun des signaux de l'ensemble. L'ensemble Idᵢ est calculable statiquement, c'est-à-dire calculable avant que le code machine 32 soit déployé dans la mémoire 4. Autrement dit, l'ensemble Idᵢ est calculable au moment de la compilation du code machine 32. De plus, dans ce mode de réalisation, si un bit utile de l'instruction Iᵢ change, au moins un bit de l'ensemble Idᵢ change également. Les bits utiles de l'instruction Iᵢ sont ceux qui contribuent soit à la définition de l'opcode soit à la définition de l'un des opérandes de l'instruction Iᵢ. Ainsi, l'ensemble Idᵢ varie en fonction de l'opcode et de la valeur de chaque opérande de l'instruction Iᵢ. Par exemple, l'ensemble Idᵢ comporte généralement les signaux de sélection des opérandes et les signaux de commande de l'unité 24.

La fonction f() de signature a les propriétés suivantes :
i) Résistance aux collisions,
ii) Préservation de l'erreur, et
iii) Non-associativité.

La résistance aux collisions signifie que, connaissant la signature Si d'une instruction Iᵢ, il est pratiquement impossible de trouver une instruction I'ᵢ qui est différente de l'instruction Iᵢ et qui présente la même signature Sᵢ. En particulier, il est pratiquement impossible en modifiant seulement quelques bits de l'instruction Iᵢ d'obtenir une instruction l'i qui présente la même signature Sᵢ.

La préservation de l'erreur signifie que si une signature S'ᵢ est erronée, c'est-à-dire qu'elle est différente de la signature Srefᵢ attendue, alors toutes les signatures suivantes Sᵢ₊ₙ sont également erronées, où n est nombre entier supérieur à zéro. Cela est rendu nécessaire par le fait que la fonction f() est une fonction de signature récursive qui construit la signature courante à partir de la signature précédente.

Grâce au propriété i) et ii), l'intégrité d'une instruction Iᵢ, peut être confirmée ou infirmée en vérifiant l'intégrité de n'importe quelle instruction suivante Iᵢ₊ₙ.

La non-associativité signifie que quelle que soit la modification de l'ordre des instructions I₁ à Iᵢ₋₁, la signature S'ᵢ construite pour l'instruction Iᵢ est différente de la signature Si construite en absence de modifications de l'ordre des instructions I₁ à Iᵢ₋₁.

De plus, ici, pour assurer la confidentialité des instructions du code machine 32, la fonction f() présente les propriétés suivantes :
- associer une signature Si différente pour chaque instruction Iᵢ différente,
- se comporter comme un générateur de nombre pseudo-aleatoire sûr, c'est-à-dire un CSPRNG (« cryptographically secure pseudorandom number generator »), et
- générer une signature de taille égale ou supérieure à la taille des instructions Iᵢ.

Par exemple, la fonction f() est une fonction CBC-MAC (« cipher block chaining message authentication code »). Toujours à titre d'illustration, dans cette fonction CBC-MAC, l'algorithme de chiffrement utilisé est un algorithme de chiffrement par bloc, par exemple, l'algorithme de chiffrement connu sous le nom de « Prince » (voir par exemple au sujet de cet algorithme, la page suivante de Wikipedia : https://en.wikipedia.org/wiki/Prince_(cipher)). L'algorithme de chiffrement « Prince » est paramétré par une clé secrète kₛ qui est seulement connue du calculateur 2 et du compilateur qui a généré le code machine 32. Typiquement, la clé kₛ est enregistrée dans un mémoire sécurisée du constructeur 42 de signature Ici, la signature Si est codée sur le même nombre de bits que l'instruction Iᵢ.

De préférence, il n'existe pas de code machine pour exécuter les fonctions g-'() et f() dans une mémoire située en dehors du microprocesseur 2. Typiquement, elles sont implémentées sous forme matérielle à l'intérieur, respectivement, du module 20 et du constructeur 42.

Le vérificateur 44 vérifie l'intégrité du code machine déchiffré et exécuté par le microprocesseur 2. Pour cela, le vérificateur 44 compare une signature Si construite par le constructeur 42 à une signature de référence Srefᵢ pré-enregistrée. Si la signature Si est identique à la signature Srefᵢ pré-enregistrée, alors le code machine est intègre. Dans le cas contraire, le vérificateur 44 déclenche le signalement d'un défaut d'intégrité. Typiquement, la signature Srefᵢ est construite lors de la compilation du code machine 2.

Dans ce mode de réalisation, la signature Srefᵢ est enregistrée dans le code machine 32. Plus précisément, immédiatement après le mot Wᵢ du code machine 32 qui contient le cryptogramme Iᵢ*, le code machine comporte un mot Wᵢ₊₁ qui contient le cryptogramme Srefᵢ* de la signature Srefᵢ. Ici, le cryptogramme Srefᵢ* est obtenu en utilisant la même fonction de chiffrement g() que celle utilisée pour chiffrer les instructions. Par exemple, le cryptogramme Srefᵢ est obtenu à l'aide de la relation suivante : Srefᵢ* = Srefᵢ XOR Srefᵢ₋₁, où la signature Srefᵢ₋₁ est celle utilisée lors de la compilation du code machine pour chiffrer l'instruction Iᵢ. Comme expliqué précédemment dans le cas des instructions Iᵢ, une erreur dans l'instruction déchiffrée ou décodée entraîne une erreur sur toutes les signatures Si+n suivantes construites par le constructeur 42. Ainsi, pour détecter un défaut d'intégrité, il n'est pas nécessaire que le vérificateur 44 vérifie l'intégrité du code machine après l'exécution de chaque instruction Iᵢ. Ici, le vérificateur 44 vérifie l'intégrité du code machine à des emplacements choisis comme étant pertinents pour garantir la sécurité du code machine exécuté. Par exemple, dans ce mode de réalisation, le vérificateur 44 vérifie l'intégrité du code machine après l'exécution de chaque instruction de branchement. A cet effet, après chaque instruction de branchement, le code machine 32 comporte un mot Wᵢ₊₁ contenant le cryptogramme Srefi*. Dans ce mode de réalisation, c'est donc l'exécution d'une instruction de branchement qui déclenche la comparaison de la signature Si construite par le constructeur 42, à la signature de référence Srefᵢ obtenue en déchiffrant le cryptogramme Srefᵢ* contenu dans le mot Wᵢ₊₁.

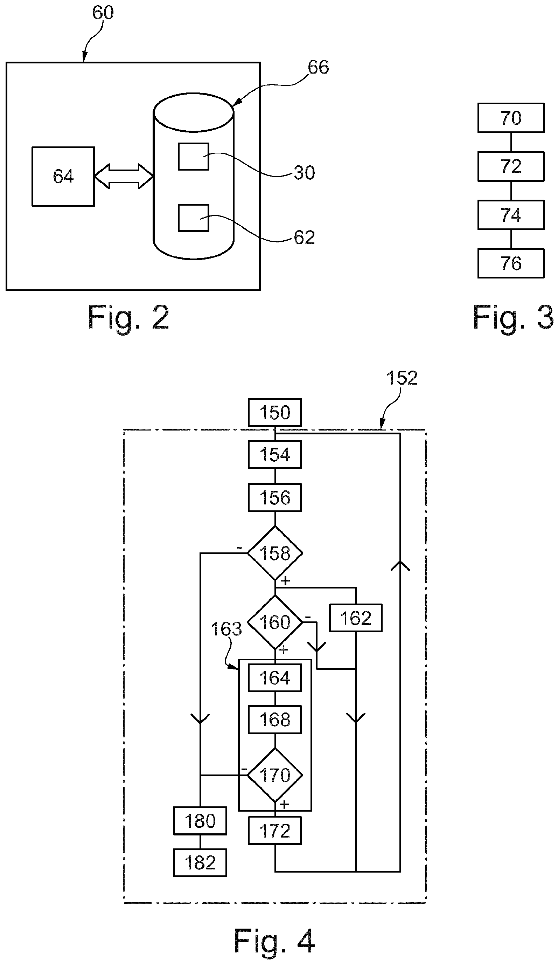

La figure 2 représente un compilateur 60 apte à générer automatiquement le code machine 32 à partir d'un code source 62. À cet effet, le compilateur 60 comporte typiquement un microprocesseur 64 programmable et une mémoire 66. La mémoire 66 contient les instructions et les données nécessaires pour, lorsqu'elles sont exécutées par le microprocesseur 64, générer automatiquement le code machine 32 à partir du code source 62. En particulier, la mémoire 66 contient les instructions nécessaires pour exécuter le procédé de la figure 3.

La figure 3 représente un procédé de génération du code machine 32 à partir du code source 62 par le compilateur 60.

Lors d'une étape 70, le compilateur 60 réalise une compilation initiale du code source 62 pour obtenir un premier code machine en clair dans lequel les instructions Iᵢ ne sont pas chiffrées. Le premier code machine ne comporte pas, à ce stade, d'instructions qui déclenchent la vérification de l'intégrité du code machine. Le premier code machine ne comporte pas non plus de signatures de référence.

Lors d'une étape 72, le compilateur 60 transforme automatiquement le premier code machine en un deuxième code machine qui contient en plus les instructions qui déclenchent la vérification d'intégrité. A cet effet, le compilateur 60 repère automatiquement, dans le premier code machine, les emplacements où doivent être insérées les instructions qui déclenchent la vérification d'intégrité. Ici, il repère les emplacements des instructions de branchement dans le premier code. Puis, après chacune de ces instructions repérées, le compilateur 60 insère automatiquement un emplacement permettant l'insertion ultérieure d'une signature de référence.

Lors d'une étape 74, le compilateur génère, à partir du deuxième code machine, un troisième code machine 32 dans lequel chaque instruction Iᵢ est remplacée par son cryptogramme Iᵢ* correspondant.

Par exemple, lors de l'étape 74, pour chaque suite d'instructions consécutives, le compilateur parcourt cette suite d'instructions dans l'ordre croissant des instructions Iᵢ. Ici, une suite d'instructions consécutives est une suite d'instructions du deuxième code machine qui sont systématiquement exécutées les unes après les autres lors de l'exécution du code machine 32 par le calculateur 2. Pour chaque instruction Iᵢ en clair rencontrée dans cette suite d'instructions, le compilateur 60 construit la signature Srefᵢ à utiliser pour obtenir le cryptogramme I*ᵢ₊₁ correspondant. En absence d'erreur, la signature Srefᵢ construite par le compilateur 60 est la même que celle qui est construite par le constructeur 42 pour déchiffrer le cryptogramme I*ᵢ₊₁ lors de l'exécution du code machine 32 par le microprocesseur 2. Pour cela, le compilateur 60 construit chaque signature Srefᵢ en utilisant la même fonction f() que celle utilisée par le constructeur 42. Ainsi, chaque signature Srefᵢ est obtenue à l'aide de la relation suivante : Srefᵢ = f(Idᵢ ; Srefᵢ₋₁). Par exemple, pour cela, le compilateur 60 implémente un simulateur qui reproduit le fonctionnement de la chaîne 10 et, en particulier, du décodeur 22 et du constructeur 42. En particulier, l'émulateur parcourt le deuxième code machine et pour chaque instruction Iᵢ du deuxième code machine :
- le simulateur produit les mêmes signaux de configuration que ceux générés par le décodeur 22 lorsqu'il a fini de décoder l'instruction Iᵢ, puis
- le simulateur construit la signature Srefᵢ à partir de l'ensemble Idi de ces signaux et de la précédente signature Srefᵢ₋₁ construite en utilisant la fonction f().

Dans ce mode de réalisation, pour chiffrer la première instruction I₁ du code machine, le compilateur utilise une signature de référence Sref₀ prédéterminée et connue du microprocesseur 2. Typiquement, la signature Sref₀ est une signature secrète connue seulement du microprocesseur 2 et du compilateur 60. Par exemple, la signature Sref₀ est enregistrée dans une mémoire sécurisée du microprocesseur 2 et utilisée par le constructeur 42 pour déchiffrer le cryptogramme contenu dans le premier mot W₁ du code machine 32.

Une fois la signature Srefᵢ construite, le compilateur 60 obtient le cryptogramme Iᵢ* à l'aide de la relation Iᵢ* = g(Iᵢ; Srefᵢ₋₁), où la fonction g() est l'inverse de la fonction g⁻¹(), c'est-à-dire qu'elle vérifie la relation suivante: Iᵢ = g⁻¹(g(Iᵢ)). Dans cet exemple, le cryptogramme Iᵢ* est obtenu à l'aide de la relation suivante : Iᵢ* = Iᵢ XOR Srefᵢ₋₁. Chaque instruction Iᵢ du deuxième code machine est alors remplacée par son cryptogramme Iᵢ* pour obtenir le troisième code machine.

Le deuxième code machine peut comporter des instructions de branchement de sorte que l'instruction précédent une instruction Iᵢ peut être soit l'instruction Iᵢ₋₁ soit une autre instruction Iⱼ selon le chemin emprunté. Dans ce cas, l'instruction Iᵢ a plusieurs instructions précédentes Iᵢ₋₁ et Iⱼ. Par contre, il ne peut y avoir qu'un seul cryptogramme Iᵢ*. Ici, le cryptogramme Iᵢ* est soit égal à g(Iᵢ; Srefᵢ₋₁) soit égal à g(Iᵢ; Srefⱼ). Pour que le cryptogramme Iᵢ* soit le même quel que soit le chemin emprunté, il faut que la signature Srefⱼ soit identique à la signature Srefᵢ₋₁. A cet effet, un mécanisme de mise à jour de la signature Srefⱼ est implémenté. Par exemple, ici, le mécanisme de mise à jour des signatures connu sous l'acronyme GPSA (« Generalized Path Signature Analysis ») est implémenté. Le mécanisme GPSA est par exemple décrit dans l'article suivant : Mario Werner et Al : « Protecting the Control Flow of Embedded Processors against Fault Attacks », CARDIS 2015: Revised Selected Papers of the 14th International Conférence on Smart Card Research and Advanced Applications - Volume 9514November 2015 Pages 161-176. Puisque le mécanisme de mise à jour des signatures est connu, la mise à jour des signatures dans le cas où une instruction a plusieurs instructions précédentes n'est pas décrite dans ce texte. Autrement dit, par la suite, la description est faite dans le cas particulier d'une suite d'instructions immédiatement consécutives, sachant que l'homme du métier sait comment appliquer cet enseignement dans le cas où le flot de contrôle du code machine présente plusieurs bifurcations correspondant, typiquement, à des instructions de branchement conditionnel.

Lors d'une étape 76, immédiatement après le cryptogramme Iᵢ* de chaque instruction qui déclenche la vérification d'intégrité, le compilateur insère automatiquement un mot Wᵢ₊₁ contenant le cryptogramme Srefᵢ* pour obtenir le code machine 32.

Dans ce mode de réalisation, le cryptogramme Srefᵢ* est obtenu à l'aide de la relation suivante : Srefᵢ* = g(Srefᵢ ; Srefᵢ₋₁), où Srefᵢ et Srefᵢ₋₁ sont les signatures construites, respectivement, pour les instructions Iᵢ et Iᵢ₋₁ lors de l'étape 74.

La figure 4 représente un procédé d'exécution du code machine 32 par le calculateur 2.

Le procédé débute par une étape 150 de fourniture du code binaire 30 dans la mémoire 4. Pour cela, par exemple, le microprocesseur 2 recopie la copie 40 à l'intérieur de la mémoire 4 pour obtenir le code binaire 30 enregistré dans la mémoire 4. Au préalable, ce code binaire 30 a été généré par le compilateur 60 en mettant en oeuvre le procédé de la figure 3.

Ensuite, lors d'une phase 152, le microprocesseur 2 exécute le code binaire 30 et, en particulier, le code machine 32.

Pour cela, pour chaque mot Wᵢ pointé par le compteur ordinal 26, la chaîne 10 exécute successivement les étapes suivantes :
- une étape 154 de chargement, par le chargeur 18, du mot Wᵢ pointé par la valeur actuelle du compteur ordinal 26, puis
- une étape 156 de déchiffrement, par le module 20, du cryptogramme contenu dans le mot Wᵢ chargé pour obtenir une instruction Iᵢ en clair,
- une étape 158 de décodage, par le décodeur 22, de l'instruction Iᵢ en clair, puis
- une étape 160 d'exécution, par l'unité 24, de l'instruction Iᵢ décodée.

De plus, par exemple en parallèle de l'étape 160, lors d'une étape 162, le constructeur 42 construit la signature Si à partir de l'ensemble Idᵢ de signaux générés par le décodeur 22 à l'issue de l'étape 158 et de la précédente signature Sᵢ₋₁ construite. La signature Si ainsi construite est alors transmise au module 20 de déchiffrement qui est alors en mesure de déchiffrer le cryptogramme Iᵢ₊₁ *de la prochaine instruction à exécuter.

Si lors de l'étape 160, l'instruction Iᵢ exécutée n'est pas une instruction qui déclenche la vérification d'intégrité, alors le compteur ordinal 26 est incrémenté du pas unitaire pour pointer sur le mot suivant Wᵢ₊₁ et le procédé retourne directement à l'étape 154 pour exécuter l'instruction suivante Iᵢ₊₁.

Si lors de l'étape 160, l'instruction Iᵢ exécutée est une instruction qui déclenche la vérification d'intégrité, alors la chaîne 10 de traitement exécute une étape 163 de vérification de l'intégrité du code machine exécuté jusqu'à présent.

Ici, cette étape 163 comporte les opérations suivantes :
- une opération 164 de chargement, par le chargeur 18, du mot Wᵢ₊₁ qui suit immédiatement le mot Wᵢ qui contient le cryptogramme Iᵢ*, puis
- une opération 168 de déchiffrement, par le module 20, du cryptogramme Srefᵢ* contenu dans le mot Wᵢ₊₁ pour obtenir la signature Srefᵢ en clair, puis
- une opération 170 de comparaison, par le vérificateur 44, de la signature Si construite pour l'instruction Iᵢ à la signature Srefᵢ obtenue à l'issue de l'opération 168.

L'adresse du mot Wᵢ₊₁ contenant le cryptogramme Srefᵢ* est déduite de la valeur du compteur ordinal 26. Par exemple, ici, l'adresse du mot Wᵢ₊₁ est égale à l'adresse contenue dans le compteur ordinal 26 après que l'instruction Iᵢ ait été exécutée.

Ensuite, si les signatures comparées Si et Srefᵢ sont identiques, le procédé se poursuit par une étape 172 lors de laquelle le compteur ordinal 26 est incrémenté pour pointer directement sur le mot Wᵢ₊₂. Après l'étape 172, le procédé retourne à l'étape 154 pour exécuter l'instruction Iᵢ₊₂.

A l'inverse, si les signatures comparées Si et Srefᵢ sont différentes, le procédé se poursuit par une étape 180 lors de laquelle un défaut d'intégrité est signalé.

De plus, lors de l'étape 158, si une instruction Iᵢ ne peut pas être décodée car sa syntaxe est incorrecte, le procédé se poursuit aussi par l'étape 180 de signalement d'un défaut d'intégrité. Lors de cette étape 180, le décodeur 22 déclenche le signalement d'un défaut d'intégrité.

En réponse à un signalement de défaut d'intégrité, lors d'une étape 182, le microprocesseur 2 met en oeuvre une ou plusieurs contre-mesures. De très nombreuses contre-mesures sont possibles. Les contre-mesures mises en oeuvre peuvent avoir des degrés de sévérité très différents. Par exemple, les contre-mesures mises en oeuvre peuvent de la levée d'une interruption jusqu'à une mise hors service définitive du microprocesseur 2 et la suppression de données sensibles. Le microprocesseur 2 est considéré comme étant hors service lorsqu'il est définitivement placé dans un état où il est incapable d'exécuter un quelconque code machine. Entre ces degrés de sévérité extrêmes, il existe de nombreuses autres contre-mesures possibles telles que :
- l'indication par l'intermédiaire d'une interface homme-machine de la détection des fautes,
- l'interruption immédiate de l'exécution du code machine 32 et/ou sa réinitialisation, et
- la suppression du code machine 32 de la mémoire 4 et/ou la suppression de la copie 40 de sauvegarde et/ou la suppression des données secrètes.

Les étapes 154, 156, 158 et 160 sont typiquement exécutées chacune en un cycle d'horloge. De plus, certaines de ces étapes sont, de préférence, exécutées en parallèle pour différentes instructions successives du code machine 32. Par exemple, la chaîne 10 peut exécuter en parallèle :
- l'étape 154 pour charger le cryptogramme Iᵢ₊₁*,
- l'étape 158 de décodage de l'instruction Iᵢ, et
- l'étape 160 d'exécution de l'instruction Iᵢ₋₁.

### Chapitre III : Variantes

### Variantes du calculateur :

La mémoire 4 peut aussi être une mémoire non volatile. Dans ce cas, il n'est pas nécessaire de copier le code binaire 30 à l'intérieur de cette mémoire avant le lancement de son exécution puisqu'il s'y trouve déjà.

La mémoire 4 peut aussi être une mémoire interne intégrée à l'intérieur du microprocesseur 2. Dans ce dernier cas, elle est réalisée sur la même puce (« die » en anglais) que les autres éléments du microprocesseur 2. Enfin, dans d'autres configurations, la mémoire 4 se compose de plusieurs mémoires dont certaines sont réalisées sur la puce du microprocesseur et d'autres sont réalisées sur une autre puce mécaniquement indépendante de la puce du microprocesseur.

En variante, l'opération de chargement du mot Wᵢ et l'opération de déchiffrement du mot Wᵢ sont réalisées lors du même cycle d'horloge par l'étage de chargement. Autrement dit, dans cette variante, le module 20 de déchiffrement est intégré dans le chargeur 18. Dans une autre variante, l'opération de déchiffrement du cryptogramme Wᵢ et l'opération de décodage de l'instruction Iᵢ sont réalisées lors du même cycle d'horloge. Autrement dit, dans cette variante, le module 20 de déchiffrement est intégré dans le décodeur 22. Il est aussi possible de placer le module 20 de déchiffrement n'importe où entre la mémoire d'instructions et le chargeur 18 d'instructions. Dans ce cas, le chargeur 18 d'instructions charge une instruction Iᵢ qui a déjà été déchiffrée et non pas le mot Wᵢ contenant le cryptogramme Iᵢ*. Toutefois, cette dernière variante peut présenter un niveau de sécurité inférieur aux autres variantes.

En variante, la chaîne matérielle de traitement comporte un ensemble de plusieurs unités arithmétiques et logiques et non pas une seule unité arithmétique et logique. Dans ce cas, en général, cet ensemble comporte des unités arithmétiques et logiques spécialisées dans l'exécution de certaines instructions spécifiques. Ainsi, lorsque l'une de ces instructions spécifiques est décodée, les signaux générés par le décodeur active spécifiquement l'unité arithmétique et logique spécialisée dans l'exécution de cette instruction spécifique. Par exemple, l'ensemble de plusieurs unités arithmétiques et logiques peut comporter :
- un ou plusieurs co-processeurs,
- une ou plusieurs mémoires IMC (« In Memory Computing ») chacune capable d'exécuter des traitements sur les données qu'elles stockent.

En variante, la chaîne de traitement n'est pas située dans un microprocesseur mais dans un co-processeur ou dans une mémoire IMC.

Dans une autre variante, les différents étages de la chaîne matérielle de traitement sont répartis différemment. En particulier, il n'est pas nécessaire que tous les étages de la chaîne de traitement soient localisés sur la même puce. Par exemple, dans une variante, le chargeur d'instruction et le décodeur sont situés sur la puce du microprocesseur tandis que l'unité arithmétique et logique est située sur une autre puce comme, par exemple, la puce d'une mémoire IMC. Dans une autre variante, c'est le constructeur 42 et le vérificateur 44 qui sont implémentés sur une autre puce.

En variante, les instructions Iᵢ n'ont pas toutes la même taille. Dans ce cas, les mots Wᵢ n'ont pas non plus tous la même taille.

### Variantes de la construction de la signature Si :

En variante, la signature Si est construite, en plus, à partir de signaux provenant d'un ou plusieurs étages suivant le décodeur 22 dans la chaîne 10 de traitement. Par exemple, les signaux générés par l'unité 24 sont utilisés pour construire la signature Sᵢ.

Dans une variante particulière, seuls les signaux générés par un ou plusieurs étages suivants le décodeur 22 sont utilisés pour construire la signature Sᵢ. Dans ce cas, les signaux générés par le décodeur 22 ne sont pas utilisés. Par exemple, seuls les signaux générés par l'unité 24 lorsqu'elle exécute l'instruction Iᵢ sont utilisés pour construire la signature Sᵢ. Dans cette variante particulière, il faut donc attendre que l'instruction Iᵢ soit exécutée avant que la signature Si construite puisse être comparée à la signature Srefᵢ. Autrement dit, dans cette variante, la vérification de l'intégrité de l'instruction Iᵢ ne peut pas être exécutée immédiatement après son décodage par le décodeur 22.

Dans un mode de réalisation simplifié, la signature Si est construite uniquement à partir du signal de configuration qui code l'opcode de l'instruction Iᵢ ou uniquement à partir des signaux de configuration qui varient en fonction de la ou des valeurs des opérandes de l'instruction Iᵢ.

D'autres modes de réalisation de la fonction f() sont possibles. Par exemple, la fonction CBC-MAC est remplacée par une autre fonction d'authentification de message comme la fonction connue sous l'acronyme H-MAC (« *Hash-based Message Authentication Code »)*

Dans un mode de réalisation simplifié, la fonction f() n'utilise pas de clé secrète. Dans ce cas, l'authenticité du code machine n'est pas garantie. Par exemple, la fonction f() est une fonction connue sous l'acronyme CRC (« Cyclic Redondancy Check) ou une fonction connue sous l'acronyme MISR (« Multiple-Input Signature Registers »).

En variante, la fonction f() ne se comporte pas comme un CSPRNG. Dans ce cas, le procédé décrit permet tout de même la dissimulation du code machine.

Il existe d'autres possibilités pour obtenir la signature initiale Sref₀. Par exemple, le microprocesseur 2 est configuré pour construire la signature initiale Sref₀ à partir du premier mot W₁ du code machine 32. A titre d'illustration, la signature Sref₀ est prise égale au premier mot W₁. Dans ce dernier cas, la signature Sref₀ est publique.

### Variantes du déchiffrement :

D'autres fonctions g-'() sont possibles. Par exemple, la fonction g⁻¹() est définie par la relation suivante : iᵢ = (i*ᵢ + Sᵢ₋₁) modulo(n), où :
- "modulo" est l'opération de l'arithmétique modulaire qui au couple (a, b) d'entiers, associe le reste de la division euclidienne de a par b,
- n est le diviseur de l'opération modulaire, et
- (i*ᵢ + Sᵢ₋₁) est le résultat de l'addition arithmétique de I*ᵢ et Sᵢ₋₁.

Dans cet exemple, n est un nombre entier prédéterminé supérieur à deux. Par exemple, n est égal à 32.

Un autre exemple possible de fonction g⁻¹() est celle définie par la relation suivante : iᵢ = i*ᵢ XOR Sᵢ₋₁ XOR kₛ, où kₛ est la clé secrète connue seulement du calculateur 2.

Si la puissance de calcul le permet, la fonction g⁻¹() peut aussi être une fonction de déchiffrement, par exemple, symétrique. La signature Sᵢ₋₁ peut alors être utilisée comme clé de déchiffrement. Dans un autre exemple, la clé de déchiffrement est la clé secrète kₛ indépendante des signatures Sᵢ. Dans ce dernier exemple, c'est une combinaison des bits du cryptogramme Iᵢ* et de la signature Sᵢ₋₁ qui est déchiffrée à l'aide de la clé kₛ. A chaque fois que la fonction g⁻¹() est modifiée, la fonction g() de chiffrement doit être adaptée en conséquence.

D'autres modes de réalisation sont possibles pour chiffrer les signatures de référence contenues dans le code machine. Par exemple, en variante, le cryptogramme Srefᵢ* contenu dans le mot Wᵢ₊₁ est obtenu à l'aide de la relation suivante : Srefᵢ* = g(Srefᵢ ; Srefᵢ) et non pas la relation Srefᵢ* = g(Srefᵢ ; Srefᵢ₋₁). Cette variante présente l'avantage que quel que soit le mot Wᵢ du code machine, la clé utilisée pour déchiffrer le cryptogramme qu'il contient est la signature Srefᵢ₋₁. Ainsi, il n'est pas nécessaire de savoir si le mot Wᵢ contient le cryptogramme d'une instruction ou d'une signature de référence pour être capable de sélectionner la clé de déchiffrement. Toutefois, dans ce cas, cela impose des contraintes supplémentaires sur le choix de la fonction g() de chiffrement. Par exemple, la fonction g() de chiffrement ne peut plus être un simple « OU EXCLUSIF » comme précédemment décrit car le résultat de Srefᵢ XOR Srefᵢ est systématiquement nul. Un exemple d'une fonction g() qui convient dans ce cas est une fonction de chiffrement symétrique.

Une autre fonction g'⁻¹() de déchiffrement peut être utilisée à la place de la fonction g-'() lorsque le cryptogramme à déchiffrer est celui d'une signature de référence. Par exemple, alors que la fonction « OU EXCLUSIF » est utilisée pour déchiffrer les cryptogrammes Iᵢ*, la fonction g'-'() est une fonction de déchiffrement symétrique qui utilise une clé secrète prédéterminée ksref.

### Variantes de la vérification de l'intégrité :

D'autres solutions sont possibles pour identifier que le mot chargé contient une signature de référence et non pas une instruction. Par exemple, dans un mode de réalisation particulier, chaque mot Wᵢ contenant le cryptogramme Iᵢ * d'une instruction est suivi d'un mot Wᵢ₊₁ contenant tout ou partie du cryptogramme Srefᵢ*. Dans ce cas, chaque mot pair chargé de la suite d'instructions, contient un cryptogramme d'une signature de référence. Il n'est alors pas nécessaire que l'instruction Iᵢ soit une instruction de branchement qui indique que le mot suivant du code machine contient le cryptogramme Srefᵢ*. Dans une variante du précédent mode de réalisation, la taille des mots Wᵢ est augmentée de manière à enregistrer dans chaque mot Wᵢ à la fois le cryptogramme Iᵢ* et le cryptogramme Srefi*. Dans cette dernière variante, le cryptogramme Srefᵢ* n'est pas enregistré dans le mot supplémentaire Wᵢ₊₁.

D'autres instructions que les instructions de branchement peuvent être utilisées pour déclencher la vérification d'intégrité. Par exemple, en variante, le code machine comporte une instruction spécifique qui, lorsqu'elle est exécutée par l'unité 24, indique que le mot suivant contient tout ou partie du cryptogramme Srefᵢ* et déclenche le déchiffrement du cryptogramme Srefᵢ* puis sa comparaison à la signature Si construite.

En variante, le cryptogramme Srefᵢ* est contenu dans le mot Wᵢ₋₁ qui précède le mot Wᵢ contenant le cryptogramme Iᵢ* et non pas dans le mot Wᵢ₊₁ comme précédemment décrit. Dans ce cas, l'instruction contenu dans le mot Wᵢ₋₂ provoque le déchiffrement et le chargement de la signature Srefᵢ dans le vérificateur 44 et le vérificateur compare la signature Srefᵢ chargée à la signature Si construite après que le décodeur 22 ait décodé l'instruction Iᵢ.

Dans une autre variante, les signatures de référence ne sont pas enregistrées dans la mémoire d'instructions qui contient le code machine 32. Par exemple, les signatures de référence sont enregistrées dans une mémoire sécurisée indépendante de la mémoire d'instructions contenant les cryptogrammes Iᵢ*. Typiquement, la mémoire sécurisée est une mémoire seulement accessible par le vérificateur 44. Dans ce cas, il n'est pas nécessaire que les signatures de référence soient stockées dans cette mémoire sécurisée sous forme de cryptogrammes. Dans cette variante, le code machine comporte des cryptogrammes d'instructions de chargement. Après déchiffrement, cette instruction de chargement est exécutée. Son exécution provoque le chargement de la signature de référence enregistrée dans la mémoire sécurisée. Par exemple, en réponse à l'exécution d'une telle instruction de chargement, la signature de référence est chargée dans le vérificateur 44 puis utilisée pour vérifier la signature construite pour une instruction décodée.

En variante, seule une partie du cryptogramme Srefᵢ* est enregistrée dans un mot du code machine. L'autre partie de ce cryptogramme Srefᵢ* est enregistrée ailleurs, par exemple, dans la mémoire sécurisée mentionnée au paragraphe précédent.

D'autres mécanismes de mise à jour des signatures, différents du mécanisme GPSA, sont possibles. Par exemple, en variante, à chaque fois qu'une instruction de branchement est exécutée, cela déclenche le chargement, par exemple à partir d'une mémoire sécurisée, d'une signature de référence associée à cette instruction de branchement.

### Autres variantes :

En variante, seules certaines instructions du code machine sont chiffrées. Par exemple, pour cela, une instruction spécifique est ajoutée au jeu d'instructions du microprocesseur 2. Lorsque cette instruction spécifique est exécutée par l'unité 24, elle indique au microprocesseur que les T prochaines instructions ne sont pas des instructions chiffrées et ne doivent donc pas être déchiffrées. Typiquement, le nombre T est un nombre entier supérieur ou égal à 1 ou 10 ou 100.

Chaque mot Wᵢ peut contenir des métadonnées en plus du cryptogramme Iᵢ*. Par exemple, ces métadonnées permettent de vérifier l'intégrité ou l'authenticité du cryptogramme Iᵢ* avant que celui-ci ne soit chargé par la chaîne 10 de traitement. Ces métadonnées peuvent aussi être utilisées pour indiquer que le mot Wᵢ contient le cryptogramme d'une signature de référence ou, au contraire, le cryptogramme d'une instruction.

Selon une autre variante, c'est un bit spécifique d'un registre de statut ou de contrôle du microprocesseur 2 qui indique si le mot chargé contient ou non le cryptogramme d'une instruction. Plus précisément, lorsque ce bit spécifique prend une valeur prédéterminée, le mot chargé est traité par la chaîne 10 comme une instruction. Si ce bit spécifique prend une valeur différente de cette valeur prédéterminée, alors le mot chargé est traité comme une signature de référence.

Lors de la compilation du code machine 30, l'étape 76 peut être réalisée en même temps que l'étape 72. Dans ce cas, lors de l'étape 72, pour chaque instruction de branchement, le compilateur 60 calcule en plus la signature Srefᵢ correspondante et l'insère dans le mot Wᵢ₊₁ qui suit cette instruction de branchement. Dans ce cas, de préférence, lors de l'étape 74 chaque signature Srefᵢ est chiffrée en utilisant exactement le même algorithme que celui utilisé pour chiffrer les instructions Iᵢ de sorte que, lors de l'étape 74, le compilateur n'a pas à distinguer les mots qui contiennent une instruction en clair des mots qui contiennent une signature en clair.

Plusieurs des différents modes de réalisation décrits ici peuvent être combinés entre eux.

### Chapitre III : Avantages des modes de réalisation décrits

Dans les modes de réalisation décrits ici, les instructions du code machine ne sont pas enregistrées en clair dans la mémoire principale ce qui rend plus difficile l'analyse du code machine. La signature Si est construite à partir de la signature Sᵢ₋₁ qui est elle-même fonction de la précédente instruction Iᵢ₋₁ et de la précédente signature Sᵢ₋₂. Ainsi, par récursivité, la signature Sᵢ₋₁ utilisée pour déchiffrer l'instruction Iᵢ dépend de toutes les instructions précédemment exécutées. Dès lors, une erreur dans le déchiffrement d'une instruction Iᵢ rend impossible le déchiffrement de toutes les instructions suivantes. L'intégrité du code est donc garantie avec un très haut niveau de sécurité. En particulier, les modes de réalisation décrits ici permettent de déclencher le signalement d'un défaut d'intégrité en cas de modification d'une instruction ou de saut d'instructions. De plus, la signature Si dépend de l'ensemble Idi de signaux de configuration. Par conséquent, les modes de réalisation décrits ici permettent aussi de déclencher le signalement d'un défaut d'intégrité en cas de modification de l'instruction après son décodage, c'est-à-dire typiquement en cas d'erreur dans le décodage de l'instruction.

Le fait de comparer la signature construite Si à une signature de référence pré-enregistre Srefᵢ permet de détecter un défaut d'intégrité sans avoir pour cela à déchiffrer et à exécuter l'instruction suivante Iᵢ₊₁. Plus précisément, cela permet de détecter un défaut d'intégrité sans reposer sur le fait que le déchiffrement d'un cryptogrammes Iᵢ₊ₙ* d'une instruction suivante produit nécessairement une instruction erronée I'ᵢ₊ₙ qui n'appartient pas au jeu d'instructions du microprocesseur 2 si l'intégrité de l'instruction Iᵢ a été compromise, où n est un nombre entier supérieur ou égal à un. Ainsi, la comparaison de la signature Si à la signature de référence Srefᵢ, permet de détecter un défaut d'intégrité même lorsque le jeu d'instructions du calculateur n'est pas clairsemé. Cette comparaison permet aussi de limiter le nombre de comportements inattendus du calculateur et donc d'augmenter la sécurité du procédé.

Le fait de déchiffrer la signature de référence à l'aide d'une signature construite pour l'une des instructions de la suite d'instructions permet d'augmenter la sécurité du procédé. En effet, la signature de référence est dissimulée et de plus elle peut être correctement déchiffrée uniquement si la suite d'instructions précédemment déchiffrées est intègre.

Le fait de déchiffrer le cryptogramme de la signature de référence Srefᵢ à partir de la signature construite Sᵢ₋₁ ou Si permet de simplifier le fonctionnement du calculateur car la même fonction g() est utilisée que le cryptogramme à déchiffrer soit celui d'une instruction ou d'une signature de référence.

Le fait d'utiliser une clé secrète pour construire la signature Si permet en plus d'authentifier le code car seul un code machine authentique comporte une suite d'instructions chiffrées à l'aide de cette même clé secrète.

Le fait d'utiliser seulement les signaux générés par le décodeur pour construire la signature Si permet d'accélérer l'exécution du code machine. En effet, dans ce cas, il n'est pas nécessaire d'attendre que l'instruction Iᵢ soit traitée par un étage suivant le décodeur 22 pour que la signature Si puisse être construite puis comparée à la signature Srefᵢ.

Le fait de construire la signature Si en fonction de l'opcode et des opérandes de l'instruction Iᵢ renforce la garantie d'intégrité du code puisque une modification quelconque de l'instruction Iᵢ entraîne une modification de la signature Sᵢ.

## Revendications

1. Procédé d'exécution d'un code machine par un calculateur comportant une chaîne matérielle de traitement d'instructions, cette chaîne matérielle de traitement comportant une succession d'étages qui traitent les uns après les autres chaque instruction à exécuter du code machine, cette succession d'étages comportant au moins les étages suivants : un chargeur d'instructions, un décodeur et une unité arithmétique et logique, ce procédé comportant l'exécution des étapes suivantes pour chaque cryptogramme d'une instruction d'une suite d'instructions consécutives du code machine :
- le chargement (154), par le chargeur d'instructions, du cryptogramme d'une instruction désignée par un compteur ordinal pour obtenir un cryptogramme chargé, puis
- le déchiffrement (156) du cryptogramme chargé pour obtenir une instruction déchiffrée, puis
- le décodage (158) de l'instruction déchiffrée, par le décodeur, pour générer des signaux qui configurent le calculateur pour exécuter l'instruction déchiffrée, puis,
- l'exécution (160), par l'unité arithmétique et logique, de l'instruction déchiffrée, **caractérisé en ce que** le procédé comporte également les étapes suivantes pour au moins une instruction courante de la suite d'instructions consécutives :
- après l'opération de décodage de l'instruction courante et avant le déchiffrement du cryptogramme de l'instruction suivante dans la suite d'instructions consécutives, la construction (162) d'une signature pour l'instruction courante :
- à partir d'un ensemble de signaux générés par un étage de la succession d'étages en réponse au traitement de cette instruction courante par cet étage, cet étage qui génère cet ensemble de signaux étant le décodeur ou un étage suivant le décodeur dans la succession d'étages, et
- à partir de la précédente signature construite pour l'instruction qui la précède dans la suite d'instructions consécutives,
cette signature pour l'instruction courante variant ainsi en fonction de l'instruction courante et en fonction de toutes les instructions précédant l'instruction courante dans la suite d'instructions consécutives, puis
- la vérification (163) de l'intégrité du code machine exécuté en comparant (170) la signature construite pour l'instruction courante à une signature de référence pré-enregistrée, puis
- seulement lorsque la vérification de l'intégrité de l'instruction courante est réussie, le déchiffrement (156) du cryptogramme de l'instruction suivante à l'aide de la signature construite pour l'instruction courante.

2. Procédé selon la revendication 1, dans lequel l'étape de vérification de l'intégrité comporte :
- le chargement (164) d'un cryptogramme de la signature de référence, puis
- le déchiffrement (168) de ce cryptogramme à l'aide d'une des signatures construites pour l'une des instructions de la suite d'instructions.

3. Procédé selon la revendication 2, dans lequel :
- le cryptogramme de la signature de référence est chargé à partir de l'adresse contenue dans le compteur ordinal après le chargement du cryptogramme de l'instruction courante et avant le chargement du cryptogramme de l'instruction suivante, et
- le cryptogramme de la signature de référence est déchiffré à l'aide de la signature construite pour l'instruction courante ou pour l'instruction qui précède cette instruction courante dans la suite d'instructions consécutives.

4. Procédé selon la revendication 1, dans lequel lors de la construction (162) de la signature pour l'instruction courante, cette signature est en plus construite à partir d'une clé secrète pré-enregistrée dans une mémoire du calculateur.

5. Procédé selon l'une quelconque des revendications précédentes, dans lequel l'étage qui génère l'ensemble de signaux utilisé pour construire la signature est le décodeur.

6. Procédé selon la revendication 5, dans lequel, lors de la construction (162) d'une signature pour l'instruction courante, cette signature est construite à partir de signaux, générés par le décodeur en réponse au décodage de l'instruction courante, qui varient en fonction de l'opcode de l'instruction courante et en fonction de chaque opérande de l'instruction courante.

7. Procédé selon l'une quelconque des revendications précédentes, dans lequel le déchiffrement du cryptogramme de chaque instruction à l'aide de la signature construite consiste en la réalisation d'un "OU EXCLUSIF" entre les bits du cryptogramme de l'instruction et les bits de la signature construite pour l'instruction qui précède cette instruction dans la suite d'instructions consécutives.

8. Procédé selon l'une quelconque des revendications précédentes, dans lequel, lorsque la signature construite pour l'instruction courante est différente de la signature de référence pré-enregistrée à laquelle elle est comparée, l'étape (163) de vérification de l'intégrité de l'instruction courante se poursuit par une étape (180) de signalement d'un défaut d'intégrité.

9. Code machine (32) apte à être exécuté en mettant en oeuvre un procédé conforme à l'une quelconque des revendications précédentes, ce code machine comprenant un cryptogramme pour chaque instruction d'une suite d'instructions consécutives,
**caractérisé en ce que** :
- chacun de ces cryptogramme est le chiffré d'une instruction correspondante de cette suite d'instructions consécutives à l'aide d'une signature construite :
- à partir des signaux générés par un étage de la succession d'étages en réponse au décodage de cette instruction correspondante par cet étage, cet étage qui génère cet ensemble de signaux étant le décodeur ou un étage suivant le décodeur dans la succession d'étages, et
- à partir de la précédente signature construite pour l'instruction qui la précède dans la suite d'instructions consécutives,
cette signature pour l'instruction correspondante variant ainsi en fonction de l'instruction correspondante et en fonction de toutes les instructions précédant l'instruction correspondante dans la suite d'instructions consécutives, et
- le code machine comporte également la signature de référence pré-enregistrée à laquelle la signature construite pour une instruction courante est comparée lors de l'exécution de ce code machine en mettant en oeuvre un procédé conforme à l'une quelconques des revendications précédentes.

10. Support d'enregistrement d'informations lisible par un microprocesseur d'un calculateur, **caractérisé en ce qu'**il comporte un code machine conforme à la revendications 9.

11. Calculateur pour la mise en oeuvre d'un procédé d'exécution conforme à l'une quelconque des revendications 1 à 8, ce calculateur comportant une chaîne matérielle (10) de traitement d'instructions, cette chaîne matérielle de traitement comportant une succession d'étages qui traitent les uns après les autres chaque instruction à exécuter du code machine, cette succession d'étages comportant au moins les étages suivants :
un chargeur d'instructions (18), un décodeur (20) et une unité arithmétique et logique (22), cette chaîne matérielle de traitement étant apte, pour chaque cryptogramme d'une instruction d'une suite d'instructions consécutives d'un code machine, à exécuter les opérations suivantes :
- le chargement, par le chargeur d'instructions, du cryptogramme d'une instruction désignée par un compteur ordinal pour obtenir un cryptogramme chargé, puis
- le déchiffrement du cryptogramme chargé pour obtenir une instruction déchiffrée, puis
- le décodage de l'instruction déchiffrée, par le décodeur, pour générer des signaux qui configurent le calculateur pour exécuter l'instruction déchiffrée, puis,
- l'exécution, par l'unité arithmétique et logique, de l'instruction déchiffrée,
**caractérisé en ce que** la chaîne matérielle de traitement est également configurée pour exécuter les étapes suivantes pour au moins une instruction courante de la suite d'instructions consécutives :
- après l'opération de décodage de l'instruction courante et avant le déchiffrement du cryptogramme de l'instruction suivante dans la suite d'instructions consécutives, la construction d'une signature pour l'instruction courante :
- à partir des signaux générés par un étage de la succession d'étages en réponse au décodage de cette instruction courante par cet étage, cet étage qui génère cet ensemble de signaux étant le décodeur ou un étage suivant le décodeur dans la succession d'étages, et
- à partir de la précédente signature construite pour l'instruction qui la précède dans la suite d'instructions consécutives,
cette signature pour l'instruction courante variant ainsi en fonction de l'instruction courante et en fonction de toutes les instructions précédant l'instruction courante dans la suite d'instructions consécutives, puis
- la vérification de l'intégrité de l'instruction courante en comparant la signature construite pour l'instruction courante à une signature de référence pré-enregistrée, puis
- seulement lorsque la vérification de l'intégrité de l'instruction courante est réussie, le déchiffrement du cryptogramme de l'instruction suivante à l'aide de la signature construite pour l'instruction courante.

12. Compilateur apte à transformer automatiquement un code source d'un programme d'ordinateur en un code binaire comportant un code machine exécutable par un calculateur comportant une chaîne matérielle de traitement d'instructions, cette chaîne matérielle de traitement comportant les étages suivants : un chargeur d'instructions, un décodeur et une unité arithmétique et logique, **caractérisé en ce que** le code machine est conforme à la revendication 9.
